# EUROPEAN PATENT SPECIFICATION

(11) **EP 1 349 386 B1**
(45) Date of publication and mention of the grant of the patent: **24.10.2012**
(21) Application number: 03004148.7
(22) Date of filing: 26.02.2003
(51) Int. Cl.: H04N 5/60

(54) **Method and apparatus of performing sample rate conversion of a multi-channel audio signal**
Verfahren und Vorrichtung zur Wandlung der Abtastraten eines Mehrkanaltonsignals
Méthode et appareil pour exécuter la conversion de cadence d'échantillonnage d'un signal audio à plusieurs canaux

(30) Priority: 26.02.2002 US 82950; 26.02.2002 US 83052; 26.02.2002 US 83076; 26.02.2002 US 83201; 26.02.2002 US 83203
(43) Date of publication of application: 01.10.2003
(73) Proprietor: Broadcom Corporation, Irvine, CA 92617 (US)
(72) Inventor: Wu, David Chaohua, San Diego, California 92111 (US); Zhong, Sheng, Fremont, California 94538 (US)
(74) Representative: Jehle, Volker Armin

(56) References cited:
- WO-A-00/65713
- WO-A-01/99277

## Description

### RELATED APPLICATIONS

The application herein references U.S. Application No. 10/083,052, U.S. Application No. 10/083,076, U.S. Application No. U.S. Application No. 10/083,203, U.S. Application No. 10/083,201 filed on the same day as the application herein.

### BACKGROUND OF THE INVENTION

Certain embodiments of the present invention relate to the processing of multi-channel television signals. More specifically, certain embodiments relate to a method and apparatus for performing sampling rate conversion on digitally decoded BTSC (Broadcast Television System Committee) audio signals.

During the 1980's, the FCC adopted the BTSC format as a standard for multi-channel television sound (MTS). Typically, the BTSC format is used with a composite TV signal that includes a video signal as well as the BTSC format for the sound reproduction.

The BTSC format is similar to FM stereo but has the ability to carry two additional audio channels. Left plus right (L+R) channel mono information is transmitted in a way similar to stereo FM in order to ensure compatibility with monaural television receivers. A 15.734 KHz pilot signal is used, instead of the FM stereo 19 KHz pilot signal, which allows the pilot signal to be phase-locked to the horizontal line frequency. A double sideband-suppressed carrier at twice the frequency of the pilot transmits the left minus right (L-R) stereo information. The stereo information is DBX encoded to aid in noise reduction. An SAP channel is located at 5 times the pilot frequency. The SAP channel may be used for second language or independent source program material. A professional audio channel may be added at 6.5 times the pilot frequency in order to accommodate additional voice or data.

Stereo tuners and demodulator units capable of decoding the BTSC format have been on the market for some time. The front end of the units typically includes analog components or integrated circuit chips. Traditionally, BTSC decoding has been done in the analog domain requiring larger, more expensive implementations that consume a significant amount of power. Previous digital implementations may not be optimized, requiring many clock cycles to perform various processing functions.

It is desirable to perform BTSC decoding in the digital domain on a block of an ASIC chip such that the implementation is optimized for reduced complexity and cost. By reducing the complexity, fewer clock cycles are required for processing, and power consumption is also reduced.

There are several digital audio output sampling rates that are standard in the industry. The standard digital audio output sampling rates include 32 KHz, 44.1 KHz, and 48 KHz. After decoding any signal component of a composite audio signal down to a common, single sampling rate, it is desirable to be able to output the signal component at any of the three sampling rates described above.

Traditionally, a design to convert from a single sampling rate to any of multiple sampling rates would require multiple sampling rate conversion schemes, one to handle each desired standard output sampling rate. As a result, duplication of hardware and additional cost and power consumption would be incurred. An efficient implementation to convert from a single sampling rate to any of the standard sampling rates is desired.

Further limitations and disadvantages of conventional and traditional approaches will become apparent to one of skill in the art, through comparison of such systems with embodiments of the present invention as set forth in the remainder of the present application with reference to the drawings.

A need exists for an approach to perform efficient sampling rate conversion in a multi-channel audio signal decoding system by reducing the complexity of the hardware required, therefore reducing cost and power consumption.

WO 01/99277 describes a method for conversion of input audio frequency data, at an input sample frequency, to output audio frequency data, at an output sample frequency. The input data is subjected to expansion to produce expanded data at an output sample frequency. The expanded data is interpolated to produce output data. The interpolation may be effected by a process that also filters the output data or the input data is sampled by an integer factor to produce expanded data and the expanded data is then interpolated to produce the output data. A method of transition of a signal output, at one frequency, to a signal output at another frequency is also described. The signal output at said one frequency is faded out over a period, and the signal output at said other frequency is faded in over that period. Both signal outputs are combined to produce the signal output over said period.

WO 00/65713 A describes a flexible sample rate converter comprising a series-arrangement of polyphase decomposition filter means and interpolator means, whereby one side of the series arrangement is coupled to an input of the flexible sample rate converter for receiving an input signal with a first sampling frequency and the other side of the series-arrangement is coupled to an output for supplying an output signal with a second sampling frequency, and the flexible sample rate converter comprises control means for controlling the polyphase decomposition filter means and the interpolation means.

According to the invention, there are provided a method of converting a first digital audio signal at a first sampling rate to a second digital audio signal at any of a plurality of sampling rates that are higher than said first sampling rate as defined by independent claim 1 and an apparatus for converting a first digital audio signal at a first sampling rate to a second digital audio signal at any of a plurality of sampling rates that are higher than said first sampling rate as defined by independent claim 7.

Further advantageous features of the invention are defined by the dependent claims.

An embodiment of the present invention provides efficient, low cost sampling rate conversion of a non-standard digital audio signal in a digital multi-channel audio system. Using a single set of low pass filter coefficients, sampling rate conversion from a non-standard digital audio rate to any of a plurality of standard digital audio rates is accomplished. In such an environment, several stages of digital processing are

performed. Efficient processing methods are used to execute the various processing functions in order to reduce clock cycles and addressing to memory.

Certain embodiments of the present invention afford an approach to achieve efficient, low cost sampling rate conversion to a plurality of standard sampling rates. Certain embodiments of the present invention also use an efficient implementation of a single, fixed set of low-pass filter coefficients to achieve any of the plurality of standard sampling rates.

### BRIEF DESCRIPTION OF THE DRAWINGS

Fig. 1 is an illustration of various possible component channels of a composite audio signal that may be decoded to extract a particular audio channel. A final step of the decoding process is sample rate conversion that uses a single, fixed set of low-pass filter coefficients in accordance with an embodiment of the present invention.
Fig. 2 is a functional block diagram of an apparatus for performing sampling rate conversion from a non-standard sampling rate to any of a plurality of standard audio sampling rates using a single, fixed set of low-pass filter coefficients in accordance with an embodiment of the present invention.
Fig. 3 is an exemplary illustration of low-pass filtering.
Fig. 4 is an illustration of the frequency response of a low-pass filter that is used in the apparatus of Fig. 2 in accordance with an embodiment of the present invention.
Fig. 5 is an exemplary illustration of low-pass filtering and linear interpolation in accordance with an embodiment of the present invention.
Figure 6 is an exemplary illustration of phased filtering in accordance with an embodiment of the present invention.

### DETAILED DESCRIPTION OF THE INVENTION

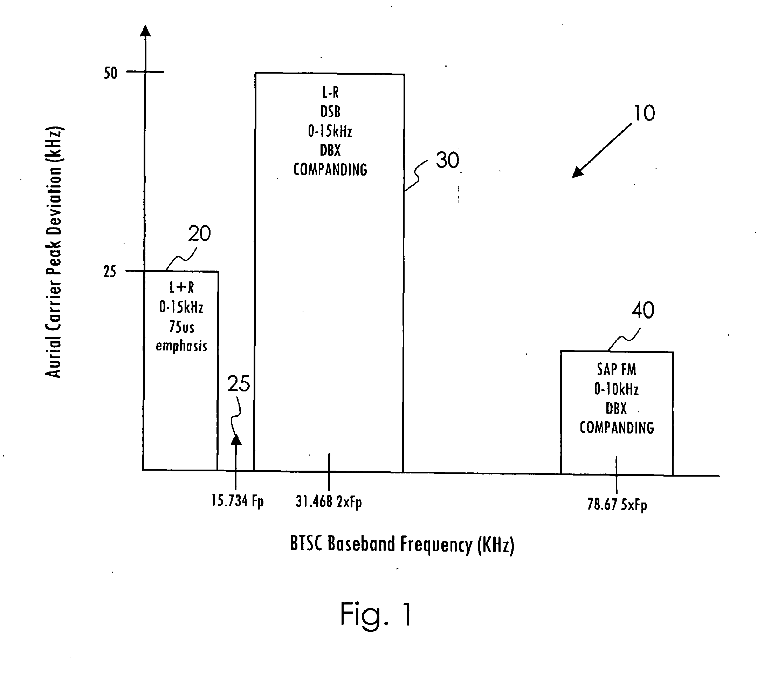

Fig. 1 is an illustration of various possible component channels of a composite audio signal 10 that may be decoded to extract a particular audio channel. A final step of the decoding process is sample rate conversion that uses a single, fixed set of low-pass filter coefficients in accordance with an embodiment of the present invention.

During the 1980's, the FCC adopted the BTSC format as a standard for multi-channel television sound (MTS). Typically, the BTSC format is used with a composite TV signal that includes a video signal as well as the BTSC format for the sound reproduction.

The BTSC format is similar to FM stereo but has the ability to carry two additional audio channels. Left plus right (L+R) channel mono information 20 is transmitted in a way similar to stereo FM in order to ensure compatibility with monaural television receivers. A 15.734 KHz pilot signal 25 is used, instead of the FM stereo 19 KHz pilot signal, which allows the pilot signal 25 to be phase-locked to the horizontal line frequency. A double sideband-suppressed carrier, at twice the frequency of the pilot, transmits the left minus right (L-R) stereo information 30. The stereo information is DBX encoded to aid in noise reduction. An SAP channel 40 is located at 5 times the pilot frequency. The SAP channel 40 may be used for second language or independent source program material. A professional audio channel (not shown) may be added at 6.5 times the pilot frequency 25 in order to accommodate additional voice or data.

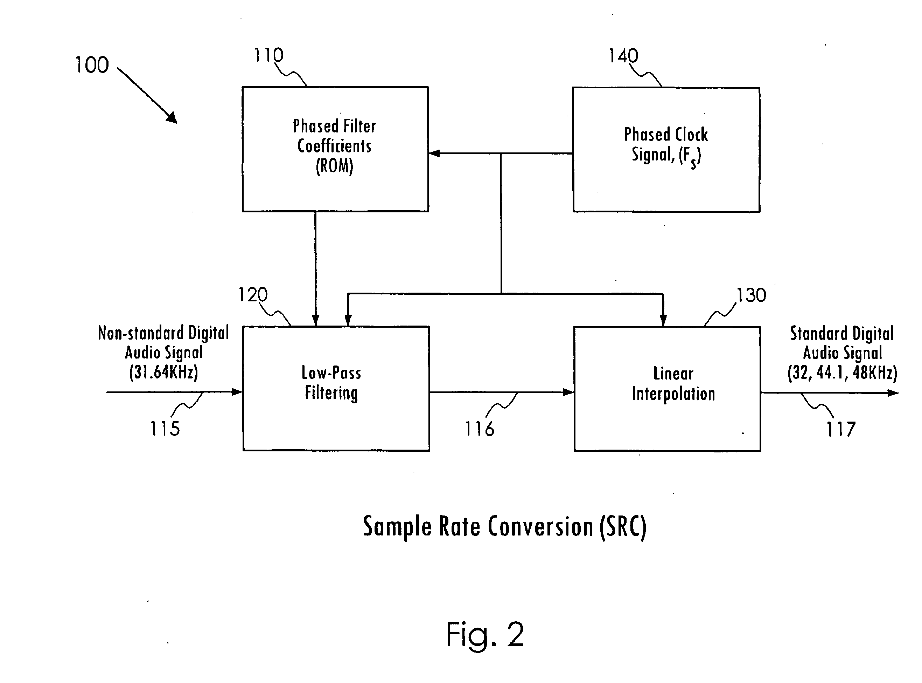

Fig. 2 is a functional block diagram of an apparatus for performing sampling rate conversion from a non-standard sampling rate to any of a plurality of standard audio sampling rates using a single, fixed set of low-pass filter coefficients in accordance with an embodiment of the present invention. The apparatus 100 comprises a ROM memory 110 storing a set of phased filter coefficients, a low-pass filter 120 performing low-pass filtering of a non-standard digital audio signal 115, and a linear interpolator 130 performing linear interpolation between output samples of the low-pass filter 120. A phased clock signal 140 is used to clock the sampling rate conversion apparatus 100 in order to output samples of a standard audio signal 117 at a standard digital audio sampling rate.

Sampling rate conversion (SRC) is performed on the decoded SAP audio signal, the demodulated mono audio signal (L+R), or the stereo left and right audio signals. In one embodiment of the present invention, the sampling rate of the demodulated audio signals is 31.64 KHz and is a non-standard sampling rate. Efficiency of preceding decoding functions is achieved, however, by generating all of the demodulated audio signals at the same sampling rate of 31.64 KHz and then performing sampling rate conversion to any of the standard audio sampling rates.

In accordance with an embodiment of the present invention, sampling rate conversion is a process of translating the non-standard audio signal sampling rate of 31.64 KHz to a sampling rate including one of the standard audio output sampling rates of 32 KHz, 44.1 KHz, or 48 KHz. An embodiment of the present invention accomplishes sampling rate conversion by performing a combination of signal up-sampling, interpolation, and signal down-sampling.

Up-sampling is the first part of sampling rate conversion and is typically performed by inserting zeros between digital samples of the non-standard digital audio signal 115 to generate a signal at a higher effective sampling rate. The value of the up-sampling factor is determined by trading off various factors of complexity, cost, and performance. In an embodiment of the present invention, the non-standard digital audio signal 115 is effectively up-sampled by a factor of 64 and filtered with a low-pass filter having 1152 taps (i.e. using 1152 coefficients).

A problem with up-sampling is that it generates aliasing. Therefore, aliased components appear in the final sampling rate converted signal if the aliased components are not filtered out (or at least greatly reduced). A low-pass filter is used to perform the function of interpolating the up-sampled signal to generate digital sample values that correspond to the up-sampled rate. If a set of low-pass filter coefficients is designed with a cut-off frequency corresponding to approximately π divided by the up-sampling factor or lower, the aliased components are filtered out of (or greatly reduced in) the resultant signal before down-sampling is performed. The vast majority of the audio information is below 12 KHz. In an embodiment of the present invention, the cut-off frequency of the low-pass filter is designed to be at 13 KHz. The cut-off frequency of 13 KHz reduces the aliased components and simplifies the filter design.

A feature of one embodiment of the present invention with respect to sampling rate conversion is that any of the resultant audio output signals (SAP out, mono out, left out, right out) may be converted to any one of the three standard audio output sampling rates listed above by using the same set of low-pass filter coefficients 110 in the SRC conversion process performed by apparatus 100.

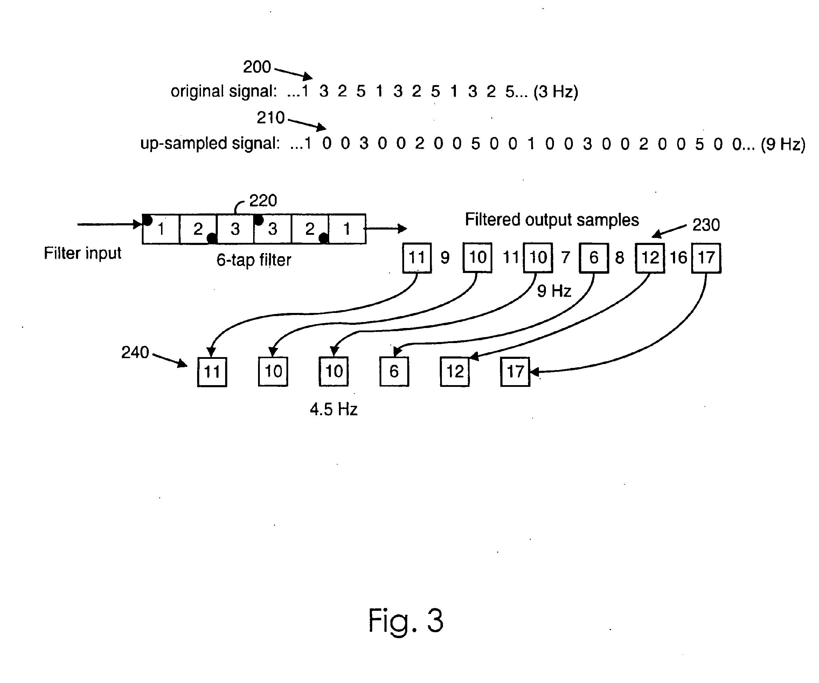

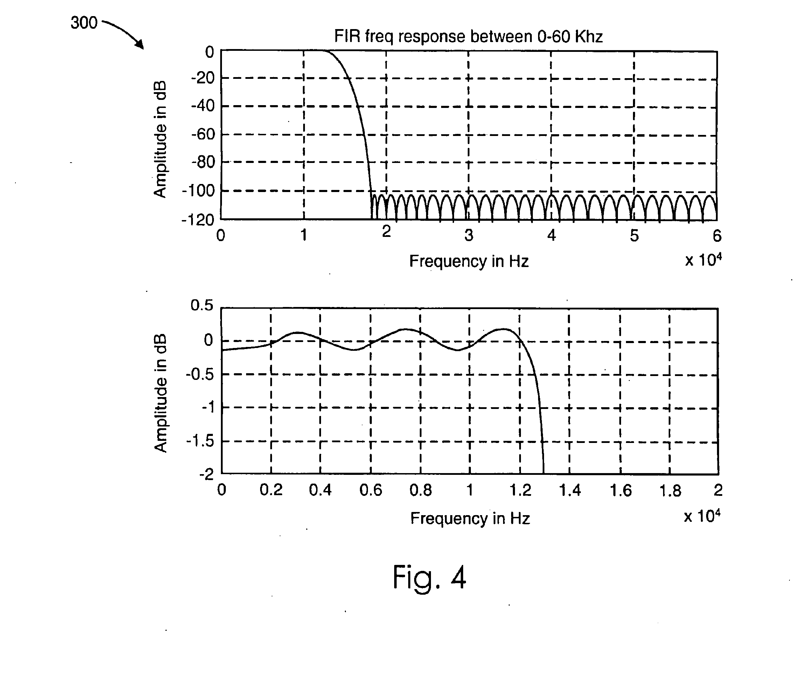

To illustrate the up-sampling and filtering process, Fig. 3 shows a simple example of inserting zeros in an original signal 200 at, for example, 3 Hz to generate an up-sampled signal 210 at 9 Hz (i.e. up-sampling factor is three). The up-sampled signal 210 is passed through a simple 6-tap filter 220 having a fixed set of filter coefficients (which are symmetric in the example) and generating a set of output samples 230. The output samples are at the up-sampled rate of 9 Hz. Typically, the coefficient values of the filter are scaled or normalized such that the resultant output values are an interpolated representation of the input values. If a down-sampling factor of, for example, two is then selected, the resultant output sampling rate is 4.5 Hz and the corresponding output samples are those samples 240 shown in the boxes in Fig. 3. By designing the filter coefficients correctly as described above, the unwanted aliased components are filtered out (or greatly reduced). In an embodiment of the present invention, the low-pass filter uses 1152 taps or coefficients having the frequency response 300 shown in Fig. 4.

If the desired final sampling rate in the example of Fig. 3 is instead 6 Hz, then the filtered signal is down-sampled by a factor of 1.5 (i.e. 9 Hz/1.5 = 6 Hz). However, down-sampling by a factor of 1.5 (a non-integer value) means sometimes selecting samples between the filtered output samples 230. Since there are no samples to choose from between the filtered output samples, linear interpolation is performed to make up samples where needed to achieve down-sampling by a factor of 1.5 yielding a sampling rate of 6 Hz.

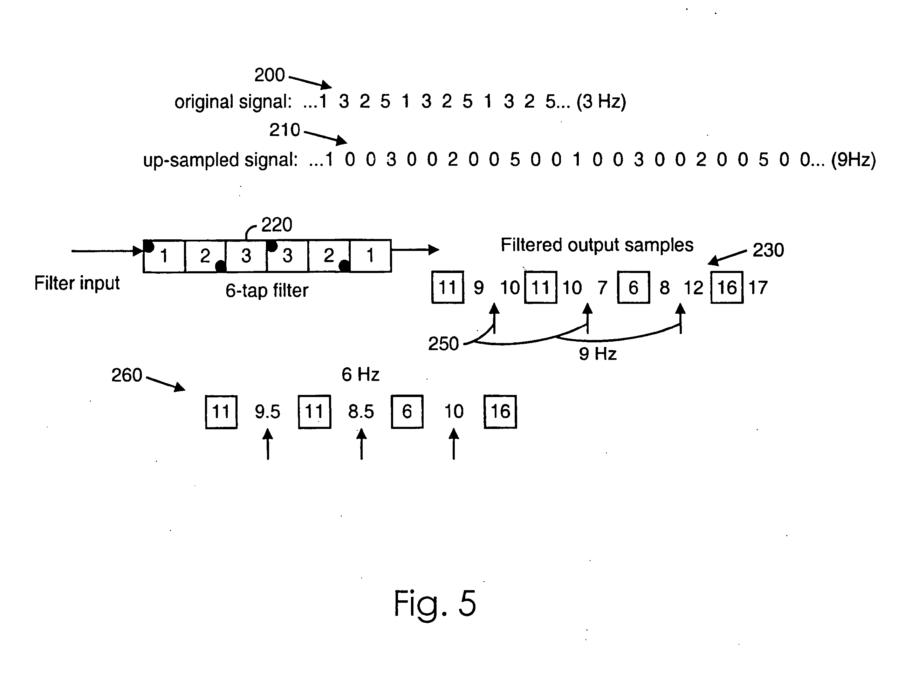

Fig. 5 illustrates the current example of sampling rate converting from 9 Hz to 6 Hz using linear interpolation. The filtered output sequence 230 is the same as before but now samples must be selected between certain output samples because the down-sampling factor is not an integer value in the current example of Fig. 5. The arrows 250, illustrate where interpolation must be performed. The boxes indicate samples that may be used directly. In the current example, the linear interpolator 130 performs a simple averaging of the values on either side of the interpolated points to yield the output sequence 260 at the desired 6 Hz rate. The values of 9.5, 8.5, and 10 are the interpolated values.

In an embodiment of the present invention, sampling rate conversion is being performed on a non-standard digital audio signal 115 of 31.64 KHz to convert to any of the standard audio sampling rates of 32 KHz, 44.1 KHz, and 48 KHz. Since the effective up-sampling factor is always 64, the down-sampling factor will never be an integer value and, therefore, linear interpolation is used to generate the standard digital audio signal 117. The down-sampling factor corresponding to the standard audio sampling rates are then

| standard sampling rate | down-sampling factor |
|---|---|
| 32 KHz | 63.28 |
| 44.1 KHz | 45.917 |
| 48 KHz | 42.186 |

Since, in an embodiment of the present invention, the up-sampling factor is always 64 and the sampling rate of the standard digital audio signal 117 is always greater than the sampling rate of the non-standard digital audio signal 115, a single set of low-pass filter coefficients may be used. There is no need for a dedicated up-sampling rate or filter for each standard sampling rate.

To simplify the implementation of an embodiment of the present invention, instead of using a single 1152-tap filter operating on an up-sampled signal, the 1152 tap coefficients are re-arranged into 64 phases of 18 coefficients each. The non-standard digital audio signal 115 is then operated on by the low-pass filter 120 with the various phases of coefficients as needed. Fig. 2 illustrates the phased filtering implementation.

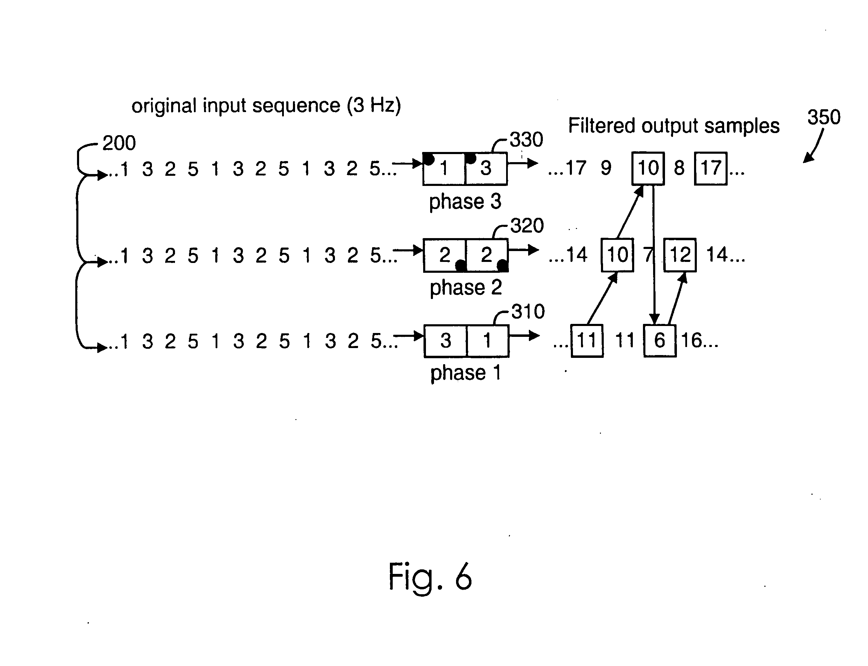

Figure 6 illustrates a simple example of phased filtering to simplify the sampling rate conversion implementation. The original filter 220 is now divided up into three phases as shown in Fig. 6. There are three phases because the up-sampling factor is three. Certain taps of the filter 200 are shown having black dots in certain corners to make it clear which taps are used to create the phased filters in Fig. 6. Every third tap is selected from the original filter 220 to generate the phased filters. The original input signal is operated on by each of the three phases yielding the filtered output samples 350 as shown in Fig. 6. If the desired output sampling rate is again 4.5 Hz as before, the down-sampling factor is again two. To generate the desired 4.5 Hz output signal, the boxed samples of the output samples 350 of the various phases shown in Fig. 6 are selected.

It may be seen that the selected output samples in Fig 6 are the same as those output samples selected in Fig. 3 for the 4.5 Hz sampling rate. Each successive output sample is generated by a different filter phase. The first sample is from phase 1 (310), the second sample is from phase 2 (320), the third sample is from phase 3 (330), and the fourth sample is again from phase 1 (310). This rotating cycle of generating the output samples at a rate of 4.5 Hz from the different phases means that only one filter phase (having only two-taps) needs to be calculated for a given output sample. Also, the non-standard digital audio signal 115 is effectively up-sampled by duplication instead of inserting zeros. The filtered signal is effectively down-sampled by applying the appropriate phased filter for the appropriate output sample. By implementing sampling rate conversion according to the configuration of Fig. 2 as illustrated by the simple example of Fig. 6, great efficiencies in hardware and computation are achieved. It should be noted that, for the example of converting to the output sampling rate of 6 Hz, two phased filtered outputs are generated for each 6 Hz output sample, and linear interpolation is performed between the two filtered samples. Still, this is a great improvement in having to up-sample by inserting zeros and operating on all 6-taps for every output sample generated.

In an embodiment of the present invention, the 1152 coefficients are divided into 64 phases of 18 coefficients each. A given 18-tap phased filter is generated by selecting every 64^{th} coefficient from the original 1152 tap filter. To generate an output sample of the standard digital audio signal, only two 18-tap phases of the 64 are used along with linear interpolation. The 64 phases are rotated through to generate successive output samples at any of the standard sampling rates. The next pair of phases to be used to generate the next output sample depends on the effective down-sampling rate currently selected and the current phase of the standard digital audio signal. Periodically during the generation of the standard digital audio signal 117, four phases are selected and 2 output sample points are generated at the same time in order to maintain the desired standard sampling rate.

For an embodiment of the present invention described, the interpolated points do not always fall exactly in between two filtered points. For any given pair of filtered points to be interpolated, there is a corresponding accumulated interpolation ratio that is generated by the linear interpolator 130. As generation of successive output samples proceeds, the linear interpolator increments the accumulated interpolation ratio, for the current phase of the standard digital audio signal being generated, and applies the current interpolation ratio in the interpolation process. For example, for the standard sampling rate of 44.1 KHz, the interpolation ratio increment is (4410-3164)/3164 = 1246/3164.

Therefore, for a first output sample of the standard digital audio signal 117, the linear interpolator will interpolate between two filtered output samples, weighting the one filtered output sample by the current accumulated interpolation ratio of 1246/3164 and the other filtered output sample by 1-(1246/3164), which is one minus the current accumulated interpolation ratio. For the very next output sample, the accumulated interpolation ratio is incremented by 1246/3164 to 2492/3164 and the linear interpolator generates the next output sample based on 2492/3164 and 1-(2492/3164). As a result, interpolation is always done at the appropriate distance between the appropriate two filtered output samples. For the other standard output sampling rates of 32 KHz and 48 KHz, the interpolation ratio increments will be (3200-3164)/3164 = 36/3164 and (4800-3164)/3164 = 1636/3164, respectively.

The various elements illustrated in Fig. 2 may be combined or separated according to various embodiments of the present invention within the ASIC chip or may be separated and implemented over more than one chip.

In summary, certain embodiments of the present invention use a single set of low-pass filter coefficients to perform sampling rate conversion from a non-standard sampling rate to any of a plurality of standard sampling rates. An efficient implementation employing phased filtering techniques is used to perform sampling rate conversion.

While the invention has been described with reference to certain embodiments, it will be understood by those skilled in the art that various changes may be made and equivalents may be substituted without departing from the scope of the invention. In addition, many modifications may be made to adapt a particular situation or material to the teachings of the invention without departing from its scope. Therefore, it is intended that the invention not be limited to the particular embodiment disclosed, but that the invention will include all embodiments falling within the scope of the appended claims.

## Claims

1. A method of converting a first digital audio signal at a first sampling rate to a second digital audio signal at any of a plurality of sampling rates that are higher than said first sampling rate, said method comprising:
storing a fixed set of filter coefficients as a plurality of phased subsets of filter coefficients, each phased subset of filter coefficients corresponding to a plurality of tap coefficients of a tap filter;
applying duplicate samples of said first digital audio signal to said plurality of phased subsets of filter coefficients to generate an up-sampled filtered audio signal, said first digital audio signal up-sampled by an up-sampling factor; and
down-sampling said up-sampled filtered audio signal by any of a plurality of down-sampling factors corresponding to said plurality of sampling rates, wherein each of said plurality of down-sampling factors is lower than said up-sampling factor, to generate said second digital audio signal at any of said plurality of audio sampling rates, wherein
down-sampling comprises using a current accumulated interpolation ratio to linearly interpolate between two up-sampled filtered samples of said up-sampled filtered audio signal to generate an interpolated output sample of said second digital audio signal, and wherein
said current accumulated interpolation ratio is used to assign weights to said two up-sampled filtered samples in performing the linear interpolation, said current accumulated interpolation ratio defined as a previous accumulated interpolation ratio plus an interpolation ratio increment, the interpolation ratio increment defined as a difference between an audio sampling rate of the second digital audio signal and said first sampling rate of said first digital audio signal, divided by said first sampling rate of said first digital audio signal.

2. The method of claim 1 wherein said up-sampling factor is an integer.

3. The method of claim 1 wherein said plurality of down-sampling factors are non-integers.

4. The method of claim 1 wherein a cut-off frequency, corresponding to a frequency response of said fixed set of filter coefficients, is no greater than a frequency corresponding to π divided by said up-sampling factor.

5. The method of claim 1 wherein a total number of said plurality of phased subsets is equal to said up-sampling factor.

6. The method of claim 1, wherein said applying duplicate samples of said first digital audio signal to said plurality of phased subsets of filter coefficients to generate an up-sampled filtered audio signal comprises applying duplicate samples of said first digital audio signal to two phased subsets of said plurality of phased subsets of filter coefficients to generate said two up-sampled filtered samples of said up-sampled filtered audio signal.

7. Apparatus for converting a first digital audio signal at a first sampling rate to a second digital audio signal at any of a plurality of sampling rates that are higher than said first sampling rate, said apparatus comprising:
a memory storing a fixed set of digital filter coefficients as a plurality of phased subsets, each phased subset of digital filter coefficients corresponding to a plurality of tap coefficients;
a tap filter applying said plurality of phased subsets to duplicate samples of said first digital audio signal to generate an up-sampled filtered audio signal; and
a linear interpolator generating an accumulated linear interpolation ratio and applying said accumulated linear interpolation ratio to said up-sampled filtered audio signal to down-sample said up-sampled filtered audio signal by any of a plurality of down-sampling factors corresponding to said plurality of sampling rates and generate said second digital audio signal at any of said plurality of sampling rates, wherein
a current value of said accumulated linear interpolation ratio linearly interpolates between two up-sampled filtered samples of said up-sampled filtered audio signal to generate an interpolated output sample of said second digital audio signal, and wherein
said current value of said accumulated linear interpolation ratio is used to assign weights to said two up-sampled filtered samples in performing the linear interpolation, said current value of said accumulated linear interpolation ratio defined as a previous value of said accumulated linear interpolation ratio plus an interpolation ratio increment, the interpolation ratio increment defined as a difference between an audio sampling rate of the second digital audio signal and said first sampling rate of said first digital audio signal, divided by said first sampling rate of said first digital audio signal.

8. The apparatus of claim 7 wherein a total number of said plurality of phased subsets is equal to an effective up-sampling factor.

9. The apparatus of claim 8 wherein said effective up-sampling factor is an integer.

10. The apparatus of claim 7 wherein said plurality of down-sampling factors are non-integers.

11. The apparatus of claim 7 wherein said memory is a ROM.

12. The apparatus of claim 7, wherein said tap filter, in generating said two up-sampled filtered samples of said up-sampled filtered audio signal, applies two phased subsets selected from said plurality of phased subsets to said duplicate samples of said first digital audio signal.

## Patentansprüche

1. Verfahren zum Umwandeln eines ersten digitalen Audiosignals mit einer ersten Abtastrate in ein zweites digitales Audiosignal mit einer einer Vielzahl von Abtastraten, die höher sind, als die erste Abtastrate, wobei das Verfahren umfasst:
Speichern eines festgelegten Satzes von Filterkoeffizienten als eine Vielzahl von Phasen-Teilsätzen von Filterkoeffizienten, wobei jeder Phasen-Teilsatz von Filterkoeffizienten einer Vielzahl von Tap-Koeffizienten eines Tap-Filters (Bandpassfilter mit Abgriff) entspricht;
Anlegen von Duplikat-Abtastungen des ersten digitalen Audiosignals an die Vielzahl von Phasen-Teilsätzen von Filterkoeffizienten, um ein upgesampeltes gefiltertes Audiosignal zu erzeugen, wobei das erste digitale Audiosignal um einen Upsampling-Faktor upgesampelt wird; und
Downsampeln des upgesampelten gefilterten Audiosignals um einen einer Vielzahl von Downsampling-Faktoren entsprechend der Vielzahl von Abtastraten, wobei jeder der Vielzahl von Downsampling-Faktoren kleiner ist, als der Upsampling-Faktor, um das zweite digitale Audiosignal mit einer der Vielzahl von Audio-Abtastraten zu erzeugen, wobei
das Downsampeln das Verwenden eines aktuellen akkumulierten Interpolationsverhältnisses umfasst, um linear zwischen zwei upgesampelten gefilterten Abtastungen des upgesampelten gefilterten Audiosignals zu interpolieren, um eine interpolierte Ausgangs-Abtastung des zweiten digitalen Audiosignals zu erzeugen, und wobei
das aktuelle akkumulierte Interpolationsverhältnis verwendet wird, um den beiden upgesampelten gefilterten Abtastungen beim Durchführen der linearen Interpolation Gewichtungen zuzuteilen, wobei das aktuelle akkumulierte Interpolationsverhältnis als vorheriges akkumuliertes Interpolationsverhältnis plus einer Interpolationsverhältnis-Inkrementierung definiert ist, wobei die Interpolationsverhältnis-Inkrementierung als Differenz zwischen einer Audio-Abtastrate des zweiten digitalen Audiosignals und der ersten Abtastrate des ersten digitalen Audiosignals, geteilt durch die erste Abtastrate des ersten digitalen Audiosignals, definiert ist.

2. Verfahren nach Anspruch 1, wobei der Upsampling-Faktor eine ganze Zahl ist.

3. Verfahren nach Anspruch 1, wobei die Vielzahl von Downsampling-Faktoren keine ganzen Zahlen sind.

4. Verfahren nach Anspruch 1, wobei eine Grenzfrequenz, die einem Frequenzansprechen des festgelegten Satzes von Filterkoeffizienten entspricht, nicht größer als eine Frequenz ist, die π geteilt durch den Upsampling-Faktor entspricht.

5. Verfahren nach Anspruch 1, wobei die Gesamtzahl der Vielzahl von Phasen-Teilsätzen gleich dem Upsampling-Faktor ist.

6. Verfahren nach Anspruch 1, wobei das Anlegen von Duplikat-Abtastungen des ersten digitalen Audiosignals an die Vielzahl von Phasen-Teilsätzen von Filterkoeffizienten, um ein upgesampeltes gefiltertes Audiosignal zu erzeugen, das Anlegen von Duplikat-Abtastungen des ersten digitalen Audiosignals an zwei Phasen-Teilsätze der Vielzahl von Phasen-Teilsätzen von Filterkoeffizienten umfasst, um die zwei upgesampelten gefilterten Abtastungen des upgesampelten gefilterten Audiosignals zu erzeugen.

7. Vorrichtung zum Umwandeln eines ersten digitalen Audiosignals mit einer ersten Abtastrate in ein zweites digitales Audiosignal mit einer einer Vielzahl von Abtastraten, die höher sind, als die erste Abtastrate, wobei die Vorrichtung aufweist:
einen Speicher, der einen festgelegten Satz digitaler Filterkoeffizienten als eine Vielzahl von Phasen-Teilsätzen speichert, wobei jeder Phasen-Teilsatz digitaler Filterkoeffizienten einer Vielzahl von Tap-Koeffizienten entspricht;
ein Tap-Filter (Bandpassfilter mit Abgriff), das die Vielzahl von Phasen-Teilsätzen an Duplikat-Abtastungen des ersten digitalen Audiosignals anlegt, um ein upgesampeltes gefiltertes Audiosignal zu erzeugen; und
einen linearen Interpolator, der ein akkumuliertes lineares Interpolationsverhältnis erzeugt und das akkumulierte lineare Interpolationsverhältnis an das upgesampelte gefilterte Audiosignal anlegt, um das upgesampelte gefilterte Audiosignal um einen einer Vielzahl von Downsampling-Faktoren entsprechend der Vielzahl von Abtastraten downzusampeln und das zweite digitale Audiosignal mit einer der Vielzahl von Abtastraten zu erzeugen, wobei
ein aktueller Wert des akkumulierten linearen Interpolationsverhältnisses linear zwischen zwei upgesampelten gefilterten Abtastungen des upgesampelten gefilterten Audiosignals interpoliert, um eine interpolierte Ausgangs-Abtastung des zweiten digitalen Audiosignals zu erzeugen, und wobei
der aktuelle Wert des akkumulierten linearen Interpolationsverhältnisses verwendet wird, um den beiden upgesampelten gefilterten Abtastungen beim Durchführen der linearen Interpolation Gewichtungen zuzuteilen, wobei der aktuelle Wert des akkumulierten linearen Interpolationsverhältnis als vorheriger Wert des akkumulierten linearen Interpolationsverhältnisses plus einer Interpolationsverhältnis-Inkrementierung definiert ist, wobei die Interpolationsverhältnis-Inkrementierung als Differenz zwischen einer Audio-Abtastrate des zweiten digitalen Audiosignals und der ersten Abtastrate des ersten digitalen Audiosignals, geteilt durch die erste Abtastrate des ersten digitalen Audiosignals, definiert ist.

8. Vorrichtung nach Anspruch 7, wobei die Gesamtzahl der Vielzahl von Phasen-Teilsätzen gleich einem effektiven Upsampling-Faktor ist.

9. Vorrichtung nach Anspruch 8, wobei der effektive Upsampling-Faktor eine ganze Zahl ist.

10. Vorrichtung nach Anspruch 7, wobei die Vielzahl von Downsampling-Faktoren keine ganzen Zahlen sind.

11. Vorrichtung nach Anspruch 7, wobei der Speicher ein ROM ist.

12. Vorrichtung nach Anspruch 7, wobei das Tap-Filter beim Erzeugen der beiden upgesampelten gefilterten Abtastungen des upgesampelten gefilterten Audiosignals zwei Phasen-Teilsätze, die aus der Vielzahl von Phasen-Teilsätzen ausgewählt sind, an die Duplikat-Abtastungen des ersten digitalen Audiosignals anlegt.

## Revendications

1. Procédé de conversion d'un premier signal audio numérique à un premier taux d'échantillonnage en un deuxième signal audio numérique à l'un quelconque d'une pluralité de taux d'échantillonnage qui sont supérieurs audit premier taux d'échantillonnage, ledit procédé comprenant :
le stockage d'un ensemble fixe de coefficients de filtre comme une pluralité de sous-ensembles synchronisés de coefficients de filtre, chaque sous-ensemble synchronisé de coefficients de filtre correspondant à une pluralité de coefficients de dérivation d'un filtre de dérivation ;
l'application d'échantillons en double dudit premier signal audio numérique à ladite pluralité de sous-ensembles synchronisés de coefficients de filtre pour générer un signal audio filtré sur-échantillonné, ledit premier signal audio numérique sur-échantillonné par un facteur de sur-échantillonnage ; et
le sous-échantillonnage dudit signal audio filtré sur-échantillonné par l'un quelconque d'une pluralité de facteurs de sous-échantillonnage correspondant à ladite pluralité de taux d'échantillonnage, dans lequel chacun de ladite pluralité de facteurs de sous-échantillonnage est inférieur audit facteur de sur-échantillonnage, pour générer ledit deuxième signal audio numérique à l'un quelconque de ladite pluralité de taux d'échantillonnage audio, dans lequel
le sous-échantillonnage comprend l'utilisation d'un rapport d'interpolation cumulé courant pour une interpolation linéaire entre deux échantillons filtrés sur-échantillonnés dudit signal audio filtré sur-échantillonné pour générer un échantillon de sortie interpolé dudit deuxième signal audio numérique, et dans lequel
ledit rapport d'interpolation cumulé courant est utilisé pour attribuer des poids auxdits deux échantillons filtrés sur-échantillonnés lors de l'exécution de l'interpolation linéaire, ledit rapport d'interpolation cumulé courant défini comme un rapport d'interpolation cumulé précédent plus un incrément de rapport d'interpolation, l'incrément de rapport d'interpolation défini comme une différence entre un taux d'échantillonnage audio du deuxième signal audio numérique et ledit premier taux d'échantillonnage dudit premier signal audio numérique, divisée par ledit premier taux d'échantillonnage dudit premier signal audio numérique.

2. Procédé selon la revendication 1, dans lequel ledit facteur de sur-échantillonnage est un entier.

3. Procédé selon la revendication 1, dans lequel ladite pluralité de facteurs de sous-échantillonnage sont des non entiers.

4. Procédé selon la revendication 1, dans lequel une fréquence de coupure, correspondant à une réponse fréquentielle dudit ensemble fixe de coefficients de filtre, n'est pas supérieure à une fréquence correspondant à divisé par ledit facteur de sur-échantillonnage.

5. Procédé selon la revendication 1, dans lequel un nombre total de ladite pluralité de sous-ensembles synchronisés est égal audit facteur de sur-échantillonnage.

6. Procédé selon la revendication 1, dans lequel ladite application d'échantillons en double dudit premier signal audio numérique à ladite pluralité de sous-ensembles synchronisés de coefficients de filtre pour générer un signal audio filtré sur-échantillonné comprend l'application d'échantillons en double dudit premier signal audio numérique à deux sous-ensembles synchronisés de ladite pluralité de sous-ensembles synchronisés de coefficients de filtre pour générer lesdits deux échantillons filtrés sur-échantillonnés dudit signal audio filtré sur-échantillonné.

7. Appareil de conversion d'un premier signal audio numérique à un premier taux d'échantillonnage en un deuxième signal audio numérique à l'un quelconque d'une pluralité de taux d'échantillonnage qui sont supérieurs audit premier taux d'échantillonnage, ledit appareil comprenant :
une mémoire stockant un ensemble fixe de coefficients de filtre numériques comme une pluralité de sous-ensembles synchronisés, chaque sous-ensemble synchronisé de coefficients de filtre numériques correspondant à une pluralité de coefficients de dérivation ;
un filtre de dérivation appliquant ladite pluralité de sous-ensembles synchronisés à des échantillons en double dudit premier signal audio numérique pour générer un signal audio filtré sur-échantillonné ; et
un interpolateur linéaire générant un rapport d'interpolation linéaire cumulé et appliquant ledit rapport d'interpolation linéaire cumulé audit signal audio filtré sur-échantillonné pour sous-échantillonner ledit signal audio filtré sur-échantillonné par l'un quelconque d'une pluralité de facteurs de sous-échantillonnage correspondant à ladite pluralité de taux d'échantillonnage et générer ledit deuxième signal audio numérique à l'un quelconque de ladite pluralité de taux d'échantillonnage, dans lequel
une valeur courante dudit rapport d'interpolation linéaire cumulé effectue une interpolation linéaire entre deux échantillons filtrés sur-échantillonnés dudit signal audio filtré sur-échantillonné pour générer un échantillon de sortie interpolé dudit deuxième signal audio numérique, et dans lequel
ladite valeur courante dudit rapport d'interpolation linéaire cumulé est utilisée pour attribuer des poids auxdits deux échantillons filtrés sur-échantillonnés lors de l'exécution de l'interpolation linéaire, ladite valeur courante dudit rapport d'interpolation linéaire cumulé définie comme une valeur précédente dudit rapport d'interpolation linéaire cumulé plus un incrément de rapport d'interpolation, l'incrément de rapport d'interpolation défini comme une différence entre un taux d'échantillonnage audio du deuxième signal audio numérique et ledit premier taux d'échantillonnage dudit premier signal audio numérique, divisée par ledit premier taux d'échantillonnage dudit premier signal audio numérique.

8. Appareil selon la revendication 7, dans lequel un nombre total de ladite pluralité de sous-ensembles synchronisés est égal à un facteur de sur-échantillonnage efficace.

9. Appareil selon la revendication 8, dans lequel ledit facteur de sur-échantillonnage efficace est un entier.

10. Appareil selon la revendication 7, dans lequel ladite pluralité de facteurs de sous-échantillonnage sont des non entiers.

11. Appareil selon la revendication 7, dans lequel ladite mémoire est une ROM.

12. Appareil selon la revendication 7, dans lequel ledit filtre de dérivation, lors de la génération desdits deux échantillons filtrés sur-échantillonnés dudit signal audio filtré sur-échantillonné, applique deux sous-ensembles synchronisés choisis parmi ladite pluralité de sous-ensembles synchronisés auxdits échantillons en double dudit premier signal audio numérique.
